# EUROPEAN PATENT APPLICATION

(11) **EP 0 748 714 A2**
(43) Date of publication of application: **18.12.1996**
(21) Application number: 96500075.5
(22) Date of filing: 12.06.1996
(51) Int. Cl.: B60N 2/22

(54) **Improved seat for vehicles**

(30) Priority: 12.06.1995 ES 9501171
(71) Applicant: INDUSTRIAS ESTEBAN, S.A., E-31012 Pamplona (Navarra) (ES)
(72) Inventor: Irmler, Helmut, Industrias Esteban, S.A., 31012 Pamplona, (Navarra) (ES)
(74) Representative: Carpintero Lopez, Francisco

(57) **Abstract**

The seat (5) includes its respective reclining backrest (6) hinged thereto, the seat as a whole being useful in passenger vehicles. The basic characteristic subject of the invention lies in that the seat body (5) is backwardly bent to define a short upwardly projecting sector (9) the top end of which is coupled with the hinge axis (7) of the actual backrest (6), the latter forming an extension of the top rear sector (9) of the seat body (5). The hinge axis (7) lies above the top plane of the seat body (5) in order for the backrest (6) not to hamper the knees (8) of a passenger sitting in the seat right behind upon being backwardly reclined.

## Description

### OBJECT OF THE INVENTION

The invention relates to a seat for vehicles and in particular a seat with its respective backrest, being especially useful in passenger vehicles, wherein the backrest as such is reclinable from the user position down to a backwardly reclined position to provide the user with greater comfort.

The object of the invention is to have the turning or reclining axis of the backrest located higher than is usually the case in order for the backward reclination of the backrest not to howsoever inconvenience the user located on the seat right behind.

### BACKGROUND OF THE INVENTION

In passenger vehicles, namely usually coaches or buses, the spaces between seats are regulated in order for the passenger to have a minimum degree of comfort, fitting as many seats as possible in the interior space of the actual vehicle.

However, the space required for passengers to be comfortable, i.e. as defined between a row of seats and the row right in front or behind, albeit complying with statutory rules, is not enough to prevent the passenger or user sitting on the seat right behind from being inconvenienced when a backrest is reclined.

In other words, when a passenger travelling in a seat reclines his backrest, he is clearly reducing the space of the passenger in the seat right behind, above all at the height of the knees or legs, which is due to the fact that the turning or reclination axis of the backrest lies on the same plane as, i.e. flush with, the top surface of the seat cushion, in register with or below the plane of the knees of the passenger sitting right behind. Whether or not they are in register shall depend upon the passenger's height, although it can in general be stated that space and hence comfort will be inconvenienced, whatever the passenger's height.

### DESCRIPTION OF THE INVENTION

The seat disclosed herein, including its respective backrest, which is sufficiently described in patents numbers 9202113 and 9202114 of the same applicant, fully solves the foregoing problems, because the seat at issue is constructed with the backrest's turning or reclination axis lying above the top plane of the seat, thereby for such reclination of the seat not to inconvenience the passenger sitting right behind, since this shall not hamper the knees as used to be the case.

In particular, the turning point of the backrest is raised by having a backwardly bent and upwardly extending seat body, to define a short initial backrest sector that will be fixed, whereas the reclining part of the backrest will be hinged to such top rear portion of the seat body, thereby for the turning axis of such backrest to lie on a higher plane than what was usually the case, i.e. above the top plane of the seat as such.

This simple and effective solution solves the problems posed by the reclination of backrests in passenger vehicles.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

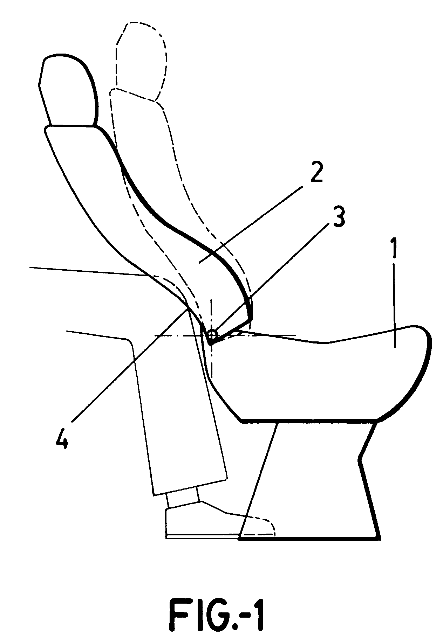

Figure 1.- Is a schematic representation of a side elevation of a conventional seat and its respective backrest, and the leg of an imaginary passenger sitting in the seat lying right behind that illustrated, showing how the reclination of the seat falls on the knee of the imaginary rear passenger, thereby inconveniencing such passenger.

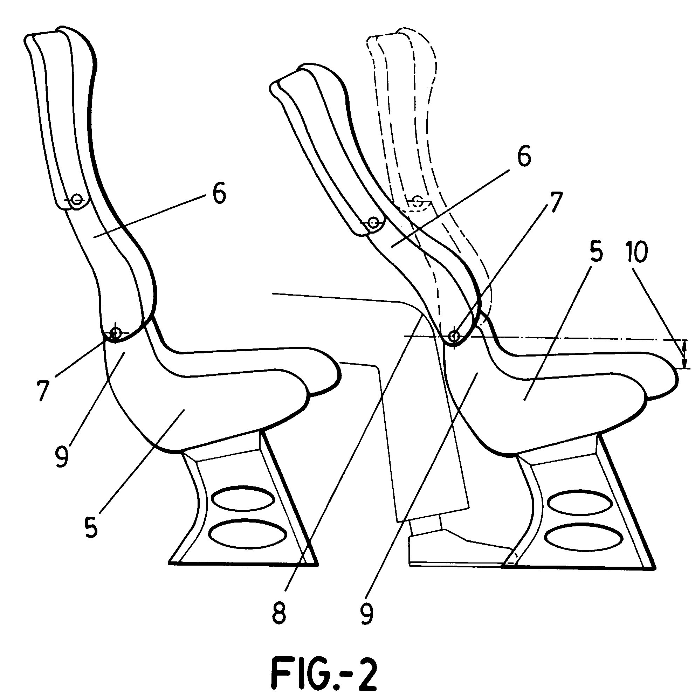

Figure 2.- Is a schematic representation of a side elevation of two correlative seats made in accordance with the object of the invention, wherein one of the seats is shown with its backrest reclined without hampering the knees of an imaginary user sitting in the seat behind.

### PREFERRED EMBODIMENT OF THE INVENTION

With reference to Figure 1, showing a conventional seat (1) with its respective backrest (2), it can be observed that the turning or reclination axis (3) of the backrest relative to the seat body (1) lies roughly at the same height as the top plane of the seat body (1), and hence upon being reclined, the backrest (2) falls on the knees (4) of an imaginary passenger sitting in the seat right behind.

With reference to figure 2, the seat (5) shown is made in accordance with the object of the invention, with its respective backrest (6), such that the hinge (7) of such backrest (6) to the seat body (5) lies above the top plane of the seat body (5), and therefore when this backrest (6) is reclined, it can be verified that the same does not in any way inconvenience the knees (8) of a user sitting in the seat right behind.

This hinge or turning axis (7) of the backrest (6) at a point higher than what is usually the case, is achieved because the rear of the seat body (1) is bent and extends upwards in order to define a short fixed sector of the actual backrest, although the reclining portion thereof is defined as from such short sector (9), for such reclining portion is the portion or body (6) that is hinged to the seat (5), in this case to the top end of the fixed sector (9) comprising the top rear extension following the bend on such seat body (5).

Figure 2 itself shows the difference in height there is between what is deemed to be the top plane of the seat body and the horizontal plane crossing the hinge axis (7) of the backrest (6), which is generally numbered (10), and corresponding to the greater height of the hinge (7) in the seat of the invention, relative to the hinge plane of conventional seats.

This position of the backrest (6) turning or hinge axis (7) on the seat body (5) clearly applies to any kind of seat, whatever its shape or external appearance.

## Claims

1. An improved seat for vehicles, being of the kind used in passenger vehicles, wherein the seat as a whole has a seat body fixed to the floor and a reclining backrest, characterised because the hinge axis (7) of the respective backrest (6) lies above the top plane of the seat body (5), allowing the actual backrest (6) to be backwardly reclined without hampering the knees (8) of a user sitting in the seat right behind.

2. An improved seat for vehicles, as in claim 1, characterised because the seat body (5) is slightly upwardly and backwardly bent, defining a short fixed sector (9) the top end of which is coupled with the hinge axis (7) of the backrest (6), the latter forming an extension of the short sector (9) defined as from the rear bend on the seat body (5).
